(19) Europäisches Patentamt
European Patent Office
Office européen des brevets

(11) EP 4 510 283 A1

(12) # EUROPEAN PATENT APPLICATION
published in accordance with Art. 153(4) EPC

(43) Date of publication:
**19.02.2025 Bulletin 2025/08**

(21) Application number: **23913970.2**

(22) Date of filing: **04.01.2023**

(51) International Patent Classification (IPC):
***H01M 10/0569*** *(2010.01)* ***H01M 10/0525*** *(2010.01)*

(52) Cooperative Patent Classification (CPC):
**H01M 10/0525; H01M 10/0569**

(86) International application number:
**PCT/CN2023/070363**

(87) International publication number:
**WO 2024/145811 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **WANG, Hansen**
  **Ningde, Fujian 352100 (CN)**
- **LIU, Chengyong**
  **Ningde, Fujian 352100 (CN)**
- **WAN, Pan**
  **Ningde, Fujian 352100 (CN)**
- **HUANG, Shengyuan**
  **Ningde, Fujian 352100 (CN)**
- **HU, Bobing**
  **Ningde, Fujian 352100 (CN)**
- **ZHANG, Rupeng**
  **Ningde, Fujian 352100 (CN)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **ELECTROLYTE SOLUTION, SECONDARY BATTERY COMPRISING SAME, AND ELECTRIC DEVICE**

(57) Disclosed is an electrolyte including a solvent, where the solvent includes at least one cyclic ether of formula (I) and at least one linear ether of formula (II). The electrolyte provides secondary batteries with metal negative electrode with a long cycle life and a high low-temperature capacity retention rate in a wide temperature range.

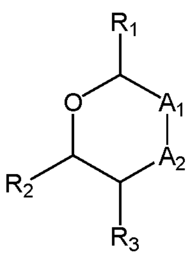
I
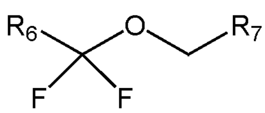
II

EP 4 510 283 A1

## Description

## TECHNICAL FIELD

This application relates to the technical field of lithium batteries, and particularly to an electrolyte, and a secondary battery and electric apparatus containing the electrolyte.

## BACKGROUND

Secondary batteries with metal negative electrode, especially secondary batteries with no negative electrode, have much higher volumetric energy density than traditional secondary batteries. Therefore, they have great application potential in application scenarios such as long-range electric vehicles, drones, and electric aircraft. However, compared with traditional secondary batteries, these types of batteries also have disadvantages, such as poorer cycling capabilities.

To improve the cycling performance of secondary batteries with metal negative electrode (such as lithium metal batteries or sodium metal batteries), especially secondary batteries with no negative electrode, improvements in the electrolyte are an important aspect. Although the room temperature cycling performance of current secondary batteries with metal negative electrode (or with no negative electrode) has been improved, electrolytes currently used in secondary batteries with metal negative electrode often come with issues such as high concentration (that is, high electrolytic salt concentration), high viscosity, and low ionic conductivity, making it difficult to ensure both low-temperature capacity release capability and long cycle life.

## SUMMARY

This application is intended to provide an electrolyte that enables secondary batteries with metal negative electrode to have good performance (for example, long cycle life and high low-temperature capacity release capability) in a wide temperature range.

To achieve the foregoing objective, this application provides an electrolyte including a solvent, where the solvent includes at least one cyclic ether of formula (I) and at least one linear ether of formula (II);

where the cyclic ether of formula (I) has the following structure:

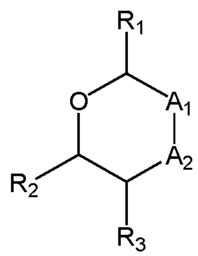

I,

where

$A_1$ is an oxygen atom, a single bond, or $CHR_4$, $A_2$ is an oxygen atom or $CHR_5$, $A_2$ is different from $A_1$, when $A_1$ is $CHR_4$, $A_2$ is not $CHR_5$, $R_1$, $R_2$, and $R_5$ are each independently a hydrogen atom, C1-6 alky, or C1-6 fluoroalkyl, $R_3$ and $R_4$ are each independently a hydrogen atom, a fluorine atom, C1-6 alkyl, or C1-6 fluoroalkyl, and $R_1$ to $R_5$ include 1 to 3 fluorine atoms; and

the linear ether of formula (II) has the following structure:

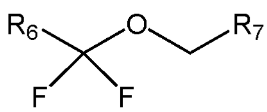

II,

where

$R_6$ is a hydrogen atom, a fluorine atom, C1-6 alkyl, or C1-6 fluoroalkyl, and $R_7$ is a hydrogen atom, C1-6 alkyl, or C1-6 fluoroalkyl.

The electrolyte of this application allows the secondary battery with metal negative electrode to have excellent performance such as long cycle life and high capacity retention rate in a wide temperature range.

In any embodiment, in formula (I), $R_1$, $R_2$, and $R_5$ are each independently a hydrogen atom, C1-4 alkyl, or C1-4 fluoroalkyl, and optionally a hydrogen atom, methyl, or fluoromethyl; and/or $R_3$ and $R_4$ are each independently a hydrogen atom, a fluorine atom, C1-4 alkyl, or C1-4 fluoroalkyl, and optionally a hydrogen atom, a fluorine atom, methyl, or fluoromethyl. Such compound of formula I can have desirable low melting and boiling points and viscosity, thereby helping the battery to maintain its capacity release capability at low temperature.

In any embodiment, one and only one of $R_1$ to $R_5$ is a fluorine-containing substituent selected from a fluorine atom or C1-6 fluoroalkyl. This can help to improve oxidation resistance of the electrolyte to achieve stable long cycling, ensure high ionic conductivity, an improve low-temperature discharge performance.

In any embodiment, the cyclic ether of formula (I) is selected from at least one of the following compounds:

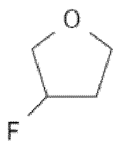
I-1 ,
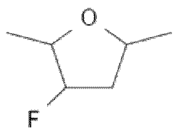
I-5 ,
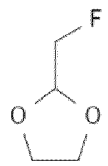
I-57 ,
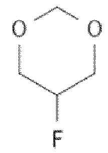
I-78 ,

and

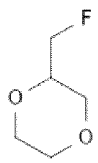
I-144 .

These compounds have good oxidation resistance which is more conducive to effective electrolytic salt dissociation and low-temperature capacity release.

In any embodiment, $R_6$ is a hydrogen atom, a fluorine atom, C1-5 alkyl, or C1-5 fluoroalkyl, and optionally a hydrogen atom, a fluorine atom, C1-2 alkyl, or C1-2 fluoroalkyl; and/or $R_7$ is a hydrogen atom, C1-5 alkyl, or C1-5 fluoroalkyl, and optionally a hydrogen atom, C1-2 alkyl, or C1-2 fluoroalkyl.

In any embodiment, a carbon atom count of at least one of $R_6$ and $R_7$ is less than 2.

The short-chain fluoroether has low melting and boiling points and viscosity, and therefore is more conducive to the low-temperature cycling capability of the battery cells as a solvent.

In any embodiment, the linear ether of formula (II) is selected from at least one of the following compounds:

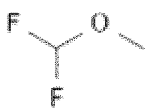
II-1 ,
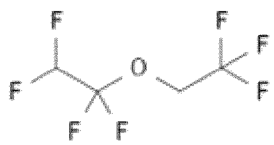
II-77 , and
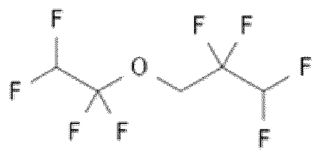
II-149 .

These linear ethers can have excellent oxidation resistance, high miscibility with the cyclic ether of formula (I), and low viscosity.

In any embodiment, a molar ratio of the cyclic ether to the linear ether is greater than 0.1, optionally from 0.2 to 6, more optionally from 0.2 to 5, further optionally from 0.4 to 2.5, and still further optionally from 0.8 to 1.25. Within the molar ratio of the cyclic ether to the linear ether falling within the above range, the electrolyte has good oxidation resistance, and the solvent can effectively dissolve the electrolytic salt, has good ion transport performance, and good cycling stability.

In any embodiment, the electrolyte further includes an electrolytic salt, where the electrolytic salt is an electrolytic salt containing fluorine; optionally, the electrolytic salt is selected from one or more of the following: lithium bis(fluorosulfonyl)imide, lithium hexafluorophosphate, lithium tetrafluoroborate, lithium hexafluoroarsenate, lithium bis(trifluoromethanesulfonyl)imide, lithium trifluoromethanesulfonate, lithium difluorophosphate, lithium bis(oxalato)borate, lithium difluoro(oxalato)borate, lithium difluoro(bisoxalato)phosphate, and lithium tetrafluoro(oxalato)phosphate; more optionally, the electrolytic salt is selected from at least one of lithium bis(fluorosulfonyl)imide, lithium hexafluorophosphate, and lithium difluoro(oxalato)borate; and further optionally, the electrolytic salt is lithium bis(fluorosulfonyl)imide. The above lithium salts have a good dissociation capability and can decompose on a surface of a negative electrode to form an SEI component rich in inorganic fluorine, which is conducive to long cycling of the lithium metal battery and helps to achieve a high ionic conductivity of the electrolyte and a low viscosity of the electrolyte, thereby improving the capacity release capability under low-temperature conditions.

In any embodiment, a concentration of the electrolytic salt is from 0.3 M to 6 M, optionally from 0.5 M to 5 M, more optionally from 1 M to 3 M, and further optionally from 1.5 M to 2.5 M. The concentration of the lithium salt within the above range is neither too high nor too low, while a too high concentration causes a decrease in ionic conductivity and an increase in viscosity, and a too low concentration affects the stability of the electrolyte to the positive and negative electrode. This achieves both long cycling and good low-temperature performance.

A second aspect of this application provides a secondary battery including the electrolyte according to any one of claims 1 to 10.

In any embodiment, the secondary battery further includes a negative electrode plate, where the negative electrode plate includes a negative electrode current collector and a negative electrode film layer optionally disposed on at least one surface of the negative electrode current collector; where the negative electrode film layer is a lithium-containing metal layer or a non-lithium-containing coating; where the lithium-containing metal is a metal element of lithium or a lithium-containing alloy, and optionally, the lithium-containing alloy is an alloy formed by lithium and other metal elements or non-metal elements, where the metal element includes tin (Sn), zinc (Zn), aluminum (Al), magnesium (Mg), silver (Ag), gold (Au), gallium (Ga), indium (In), platinum (Pt), and a combination thereof, and the non-metal element includes boron (B), carbon (C), silicon (Si), and a combination thereof, and the non-lithium-containing coating is a coating containing no lithium metal nor oxide thereof, optionally, the non-lithium-containing coating is selected from tin, zinc, aluminum, magnesium, silver, gold, gallium, indium, platinum, zinc oxide, aluminum oxide, or titanium oxide coating, optionally zinc or zinc oxide coating, and more optionally zinc coating.

In any embodiment, a thickness of the non-lithium-containing coating is at most 200 nm, optionally from 50 nm to 200 nm, and more optionally from 50 nm to 100 nm. The coating containing no lithium metal can induce dense deposition of lithium metal and improve the cycling efficiency.

A third aspect of this application provides an electric apparatus including the secondary battery of the second aspect of this application.

The electrolyte of this application allows secondary batteries with metal negative electrode (especially secondary batteries with no negative electrode) to have a long cycle life in a wide temperature range and provides the batteries with a high low-temperature capacity retention rate.

BRIEF DESCRIPTION OF DRAWINGS

FIG. 1 is a schematic diagram of a battery cell according to an embodiment of this application.
FIG. 2 is an exploded view of the battery cell according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

Description of reference signs:
1 battery pack; 2 upper box body; 3 lower box body; 4 battery module; 5 battery cell; 51 housing; 52 electrode assembly; and 53 top cover assembly.

## DESCRIPTION OF EMBODIMENTS

The following specifically discloses embodiments of an electrolyte, a secondary battery, and an electrical apparatus of this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Secondary batteries with metal negative electrode, especially secondary batteries with no negative electrode, have much higher volumetric energy density than traditional secondary batteries. Therefore, they have great application potential in application scenarios such as long-range electric vehicles, drones, and electric aircraft. However, compared with traditional secondary batteries, these types of batteries also have disadvantages, such as poorer cycling capabilities.

To improve the cycling performance of secondary batteries with metal negative electrode (such as lithium metal batteries or sodium metal batteries), especially secondary batteries with no negative electrode, improvements in the electrolyte are an important aspect. Although the room temperature cycling performance of current secondary batteries with metal negative electrode (or with no negative electrode) has been improved, electrolytes currently used in secondary batteries with metal negative electrode often come with issues such as high concentration (that is, high electrolytic salt concentration), high viscosity, and low ionic conductivity, making it difficult to ensure both low-temperature capacity release capability and long cycle life.

In view of the above problems, there is a need in the art for an electrolyte that can improve both the room temperature and low-temperature performance of secondary batteries with metal negative electrode.

This application is intended to provide an electrolyte that enables secondary batteries with metal negative electrode to have excellent performance (for example, long cycle life and high low-temperature capacity release capability) in a wide temperature range.

Electrolyte

In an embodiment of this application, this application provides an electrolyte including a solvent, where the solvent includes at least one cyclic ether of formula (I) and at least one linear ether of formula (II);

where the cyclic ether of formula (I) is

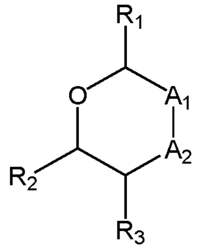

I,

where

$A_1$ is an oxygen atom, a single bond, or $CHR_4$, $A_2$ is an oxygen atom or $CHR_5$, $A_2$ is different from $A_1$, when $A_1$ is $CHR_4$, $A_2$ is not $CHR_5$, $R_1$, $R_2$, and $R_5$ are each independently a hydrogen atom, C1-6 alky, or C1-6 fluoroalkyl, $R_3$ and $R_4$ are each independently a hydrogen atom, a fluorine atom, C1-6 alkyl, or C1-6 fluoroalkyl, and $R_1$ to $R_5$ include 3 fluorine atoms at most; and

the linear ether of formula (II) is

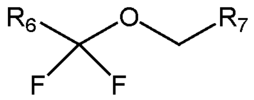

II,

where

$R_6$ is a hydrogen atom, a fluorine atom, C1-6 alkyl, or C1-6 fluoroalkyl, and $R_7$ is a hydrogen atom, C1-6 alkyl, or C1-6 fluoroalkyl.

The electrolyte of this application allows secondary batteries with metal negative electrode (especially secondary batteries with no negative electrode) to have a long cycle life in a wide temperature range and provides the batteries with a high low-temperature capacity retention rate.

In this specification, "secondary battery with metal negative electrode" and similar expressions mean a secondary battery whose negative electrode plate has a lithium metal foil or sodium metal foil that serves as a negative electrode active material layer on at least one surface of a negative electrode current collector.

Herein, "secondary battery with no negative electrode" and similar expressions mean a secondary battery whose negative electrode plate has only a negative electrode current collector without any negative electrode active material layer.

In this specification, "single bond" has the meaning commonly understood by those skilled in the art, meaning a covalent bond formed by two atoms sharing one pair of electrons; and is usually represented by a short line "-".

In this specification, for "discharge capacity retention rate", it is defined that if an average released capacity of a battery at 25°C is $C_0$, and an average released capacity at t°C is Ct, a capacity retention rate is $C_t/C_0$.

In this specification, "solvent" has the generally understood meaning, that is, a liquid used to dissolve a solute. Specifically, in this application, the solvent is a liquid compound or mixture thereof used to dissolve an electrolytic salt, an additive (if present), and the like contained in an electrolyte, and usually accounts for at least 10% by weight of the electrolyte.

In this specification, "low temperature" means a temperature range of about -40°C to about 0°C.

In this specification, "low-temperature capacity release capability" is measured by using a capacity retention rate at low temperature (for example, -40°C).

The solvent of the electrolyte of this application includes a combination of cyclic fluoroether of formula (I) and linear fluoroether of formula (II).

Without wishing to be bound by any theory, the cyclic ether of formula I contained in the electrolyte of this application have a 5- or 6-membered ring structure with a small-volume substituent. The number of fluorine atoms in the substituent does not exceed 3, and (crucially) the fluorine atom does not directly substitute a carbon atom adjacent to an oxygen atom. There are multiple advantages to select such compound. First, due to a moderate ring strain and stable structure, the 5- or 6-membered ring structure is not prone to oxidative ring-opening during cycling, which deteriorates the battery performance. In addition, such a ring structure also allows the compound to have an appropriate solvation capability, helping the secondary battery to maintain an ideal discharge capacity at low temperature. However, when the compound has a ring structure with no more than 5 members (such as 3 members or 4 members), the ring strain of the compound is large, making the compound unstable and prone to decomposition. However, a ring structure with more than 6 members (such as 7 and more members) is large in volume, resulting in poor ion transport performance. Secondly, the compound of formula I has a small-volume substituent, such as hydrogen atom, fluorine atom, C1-6 alkyl or C1-6

fluoroalkyl. Such small-volume substituent results in the compound and a solvent containing the compound having low melting and boiling points and viscosity, which is conducive to maintaining the discharge capacity at low temperature. Additionally, the fluorine-containing substituent in the compound of formula I (including fluoroalkyl and fluorine atom) is necessary to achieve the desired effects of this application. This is because by utilizing the strong electron-withdrawing effect of fluorine atoms, such substituent allows the compound to have improved oxidation resistance, which is more conducive to implementing the long-term stable cycling of secondary batteries with metal negative electrode. However, the inventors have found that in the compound of formula I in this application, no more than 3 fluorine atoms should be contained in all substituents, and the fluorine atom cannot directly substitute a carbon atom adjacent to an oxygen atom. This is because the strong electron-withdrawing effect of the fluorine atom strongly attracts a lone pair electrons of oxygen atom. Therefore, the fluorine-containing substituents of this specific number and positions are more favorable for maintaining the capability of the oxygen atom to bind with lithium ions or sodium ions, thereby enabling solvent molecule to effectively dissociate (or solvate) the electrolytic salt, leading to high ionic conductivity in the electrolyte system and improved low-temperature discharge performance thereof.

Without being bound by any theory, the linear ethers of formula (II) contained in the electrolyte of this application have a shorter chain length (at most 6 carbons), and (importantly) among two carbons adjacent to the oxygen atom, one must be substituted by two fluorine atoms, while the other is not substituted by fluorine. Linear ethers with a carbon count not greater than 6 have low melting and boiling points and viscosity, which is beneficial for the low-temperature cycling capability of the battery cell. Fluorine substitution at specific position in a specific manenr (that is, unilateral fluorine substitution) utilizes the strong electron-withdrawing effect to inhibit the solvation capability of the oxygen atom, enabling the linear ether unable to dissolve the electrolytic salt. Therefore, in combination with cyclic fluoroether, the viscosity can be further reduced while a coordination environment of the cyclic ether and active ions (for example, lithium ions) is not compromised. This helps to improve the cycle life and low-temperature performance of the lithium metal battery. The inventors have found that in a molecular chain, two carbon atoms adjacent to an oxygen atom cannot both be substituted by fluorine, otherwise the molecular polarity is too low, making it difficult to mix with cyclic ether dissolved with an electrolytic salt to form a uniform solution. Additionally, in molecules of the linear ether of formula (II), further fluorine substitution can be performed on a carbon atom other than a carbon atom adjacent to an oxygen atom, and there is no restriction on the number of fluorine substitutions, so as to improve the oxidation resistance and enhance the stability of the electrolyte and the positive electrode.

The electrolyte containing a combination of solvents from formula (I) and formula (II) in the solvent can enhance the cycling efficiency of lithium metal batteries, improve the cycle life at room temperature and low temperature and capacity release capability at low temperature of batteries, and enable batteries to have good performance over a wide temperature range, meeting the functional requirements for low temperature scenarios in future electric vehicles and high-altitude electric aircraft.

In some embodiments, in formula (I), $R_1$, $R_2$, and $R_5$ are each independently a hydrogen atom, C1-4 alkyl, or C1-4 fluoroalkyl, and optionally a hydrogen atom, methyl, or fluoromethyl. Advantageously, $R_1$, $R_2$, and $R_5$ are selected from hydrogen atom, and alkyl or haloalkyl with a short carbon chain, because such compounds of formula I can have desirable low melting and boiling points and viscosity, thereby helping the battery to maintain its capacity release capability at low temperature. Optionally, the fluoroalkyl is monofluoroalkyl. In some embodiments, $R_1$, $R_2$, and $R_5$ are each independently a hydrogen atom, methyl, or fluoromethyl. Optionally, the fluoromethyl is monofluoromethyl. In some embodiments, $R_1$, $R_2$, and $R_5$ are each independently a hydrogen atom or fluoromethyl. In some embodiments, $R_1$ is a hydrogen atom or monofluoromethyl; and $R_2$ and $R_5$ are each independently hydrogen.

In some embodiments, in formula (I), $R_3$ and $R_4$ are each independently a hydrogen atom, a fluorine atom, C1-4 alkyl, or C1-4 fluoroalkyl, and optionally a hydrogen atom, a fluorine atom, methyl, or fluoromethyl. Advantageously, $R_3$ or $R_4$ is selected from hydrogen atom, fluorine atom, and alkyl or haloalkyl with a short carbon chain, because such compounds of formula I can have desirable low melting and boiling points and viscosity, thereby helping the battery to maintain its capacity release capability at low temperature. Optionally, the fluoroalkyl is monofluoroalkyl. In some embodiments, $R_3$ and $R_4$ are each independently a hydrogen atom, a fluorine atom, methyl, or fluoromethyl. Optionally, the fluoromethyl is monofluoromethyl. In some embodiments, $R_3$ and $R_4$ are each independently a hydrogen atom or a fluorine atom. In some embodiments, $R_3$ is a hydrogen atom or fluorine atom, and $R_4$ is a hydrogen atom.

In some embodiments, in formula (I), one and only one of $R_1$ to $R_5$ is a fluorine-containing substituent selected from a fluorine atom or C1-6 fluoroalkyl. Including a fluorine-containing substituent in formula I can significantly improve the oxidation resistance thereof to achieve long-term stable cycling of the lithium metal battery. However, preferably, there is not more than one fluorine-containing substituent, because this is conducive to the capability of the solvent to dissolve the electrolytic salt, ensuring high ionic conductivity and improving low-temperature discharge performance.

In some embodiments, the cyclic ether of formula (I) is selected from at least one of the following compounds:

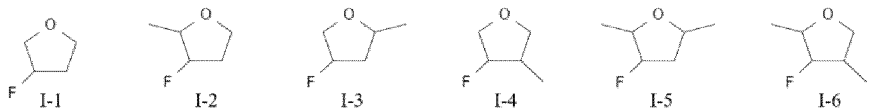

I-1 I-2 I-3 I-4 I-5 I-6

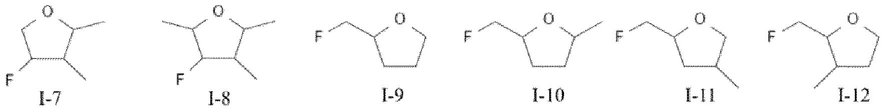

I-7 I-8 I-9 I-10 I-11 I-12

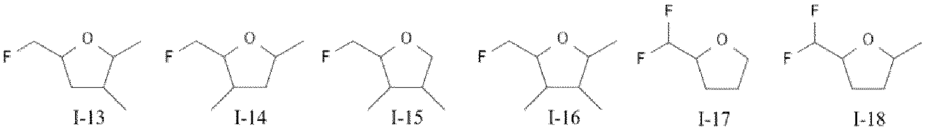

I-13 I-14 I-15 I-16 I-17 I-18

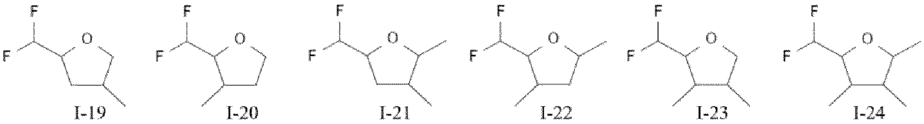

I-19 I-20 I-21 I-22 I-23 I-24

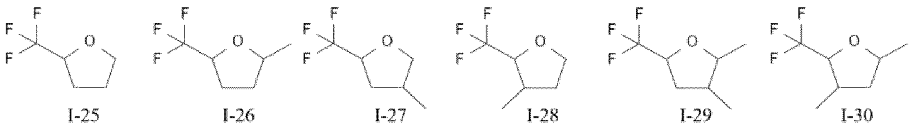

I-25 I-26 I-27 I-28 I-29 I-30

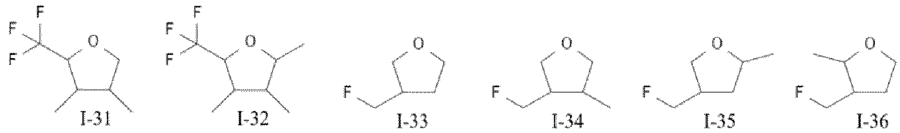

I-31 I-32 I-33 I-34 I-35 I-36

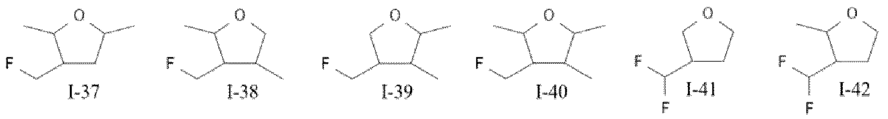

I-37 I-38 I-39 I-40 I-41 I-42

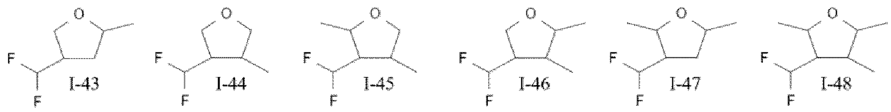

I-43 I-44 I-45 I-46 I-47 I-48

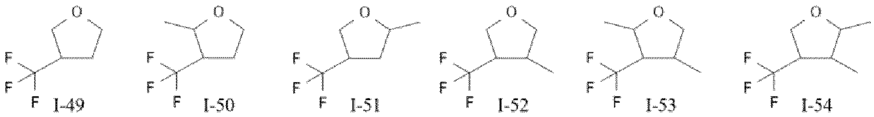

I-49 I-50 I-51 I-52 I-53 I-54

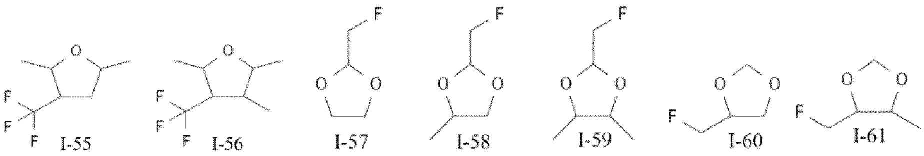

I-55 I-56 I-57 I-58 I-59 I-60 I-61

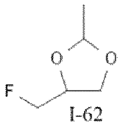
I-62

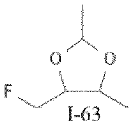
I-63

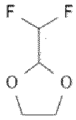
I-64

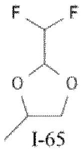
I-65

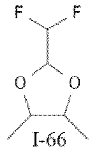
I-66

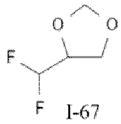
I-67

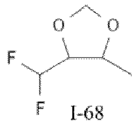
I-68

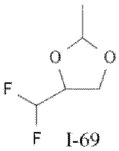
I-69

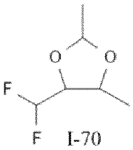
I-70

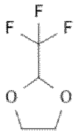
I-71

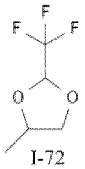
I-72

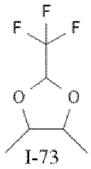
I-73

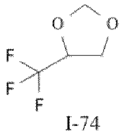
I-74

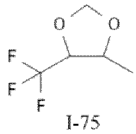
I-75

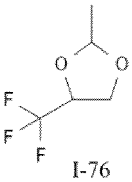
I-76

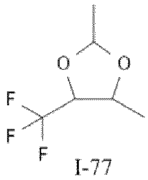
I-77

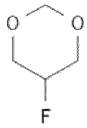
I-78

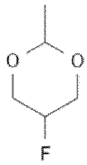
I-79

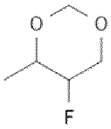
I-80

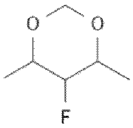
I-81

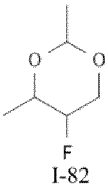
I-82

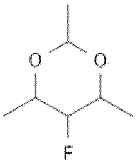
I-83

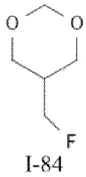
I-84

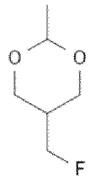
I-85

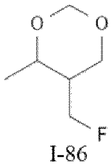
I-86

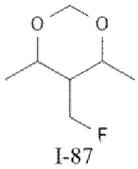
I-87

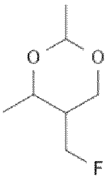
I-88

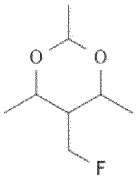
I-89

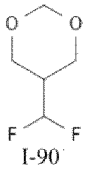
I-90

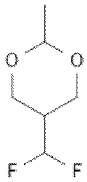
I-91

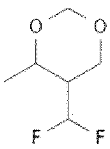
I-92

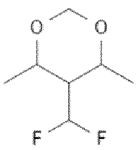
I-93

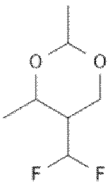
I-94

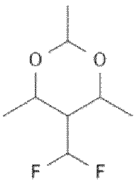
I-95

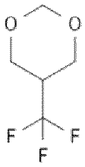
I-96

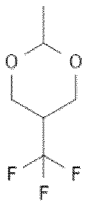
I-97

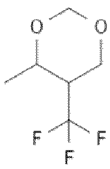
I-98

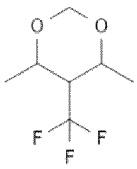
I-99

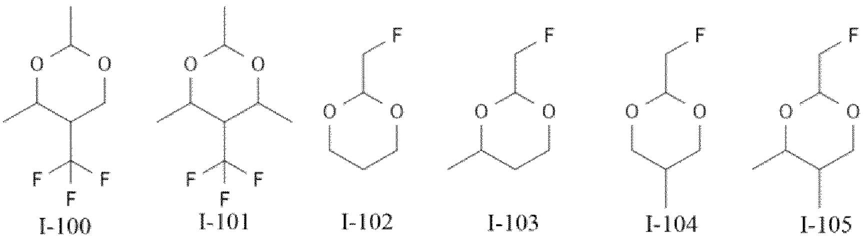
I-100

I-101

I-102

I-103

I-104

I-105

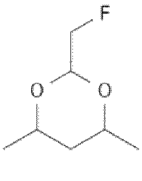
I-106

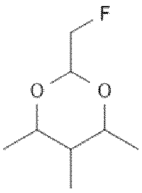
I-107

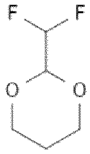
I-108

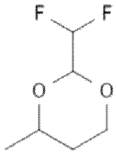
I-109

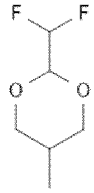
I-110

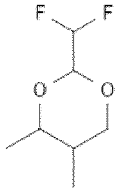
I-111

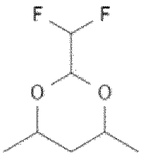
I-112

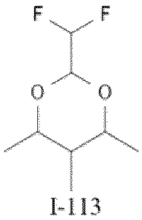
I-113

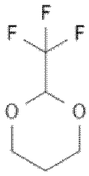
I-114

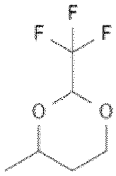
I-115

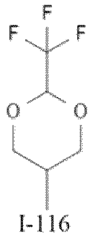
I-116

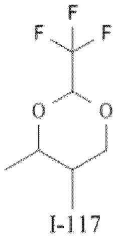
I-117

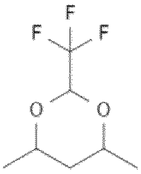
I-118

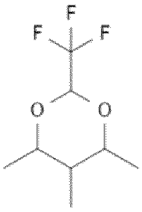
I-119

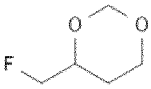
I-120

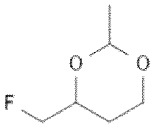
I-121

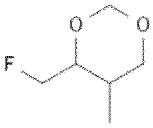
I-122

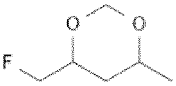
I-123

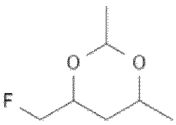
I-124

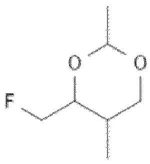
I-125

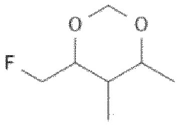
I-126

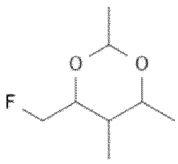
I-127

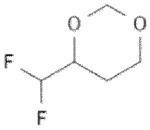
I-128

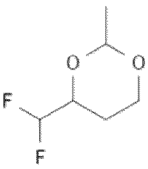
I-129

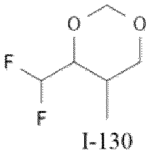
I-130

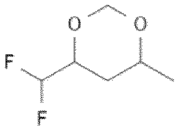
I-131

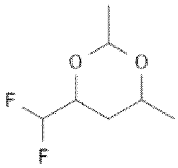
I-132

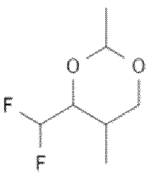
I-133

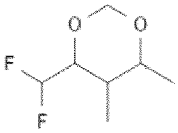
I-134

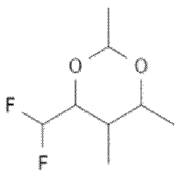
I-135

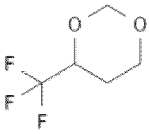
I-136

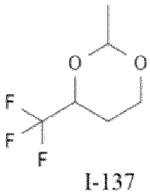
I-137

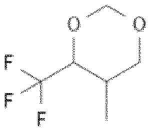
I-138

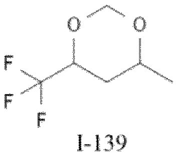
I-139

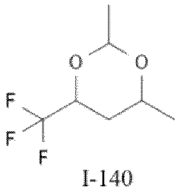
I-140

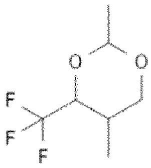
I-141

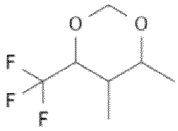
I-142

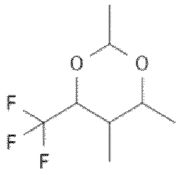
I-143

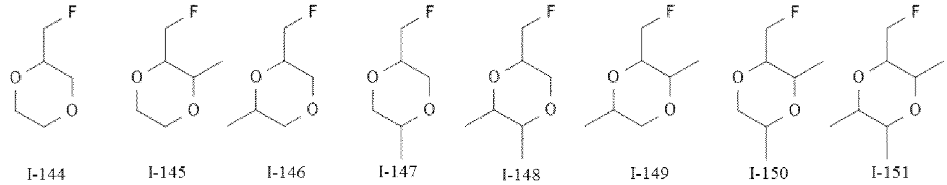
I-144 I-145 I-146 I-147 I-148 I-149 I-150 I-151

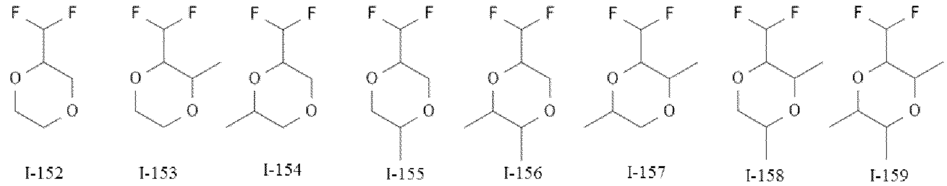
I-152 I-153 I-154 I-155 I-156 I-157 I-158 I-159

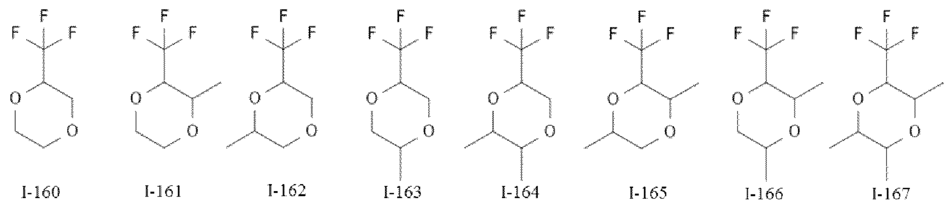
I-160 I-161 I-162 I-163 I-164 I-165 I-166 I-167

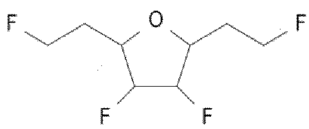
I-168

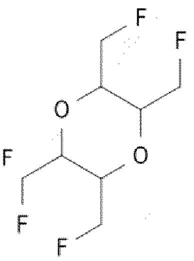
I-169

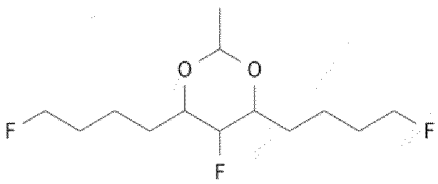
I-170

In some embodiments, the cyclic ether of formula (I) is selected from at least one of compounds I-1, I-5, I-57, I-78, and I-144. These compounds have good oxidation resistance, and can effectively dissociate the electrolytic salt, which is conducive to low-temperature capacity release.

In some embodiments, in formula (II), $R_6$ is a hydrogen atom, a fluorine atom, C1-5 alkyl, or C1-5 fluoroalkyl, and optionally a hydrogen atom, a fluorine atom, C1-2 alkyl, or C1-2 fluoroalkyl. In some embodiments, in formula (II), $R_7$ is a hydrogen atom, C1-5 alkyl, or C1-5 fluoroalkyl, and optionally a hydrogen atom, C1-2 alkyl, or C1-2 fluoroalkyl.

In some embodiments, in formula (II), a carbon atom count of at least one of $R_6$ and $R_7$ is less than 2.

The short-chain fluoroether has low melting and boiling points and viscosity, and therefore is more conducive to the low-temperature cycling capability of the battery cells as a solvent.

In case that $R_6$ and $R_7$ are fluoroalkyl, there is no limit to the number of fluorine substituents.

In some embodiments, the cyclic ether of formula (II) is selected from at least one of the following compounds:

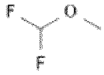
II-1

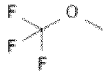
II-2

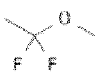
II-3

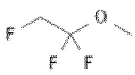
II-4

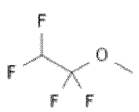
II-5

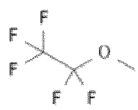
II-6

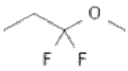
II-7
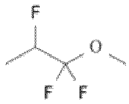
II-8
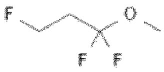
II-9
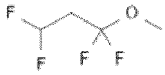
II-10
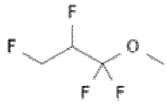
II-11

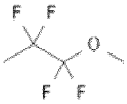
II-12
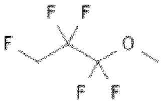
II-13
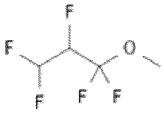
II-14
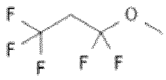
II-15
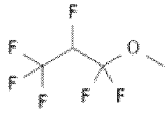
II-16

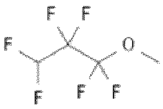
II-17
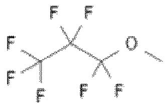
II-18
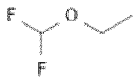
II-19
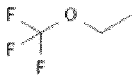
II-20
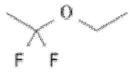
II-21

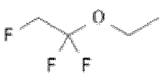
II-22
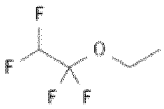
II-23
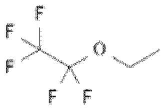
II-24
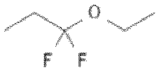
II-25
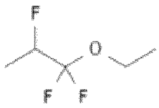
II-26

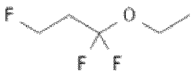
II-27
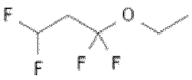
II-28
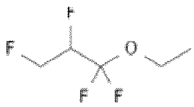
II-29
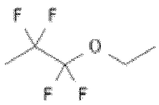
II-30

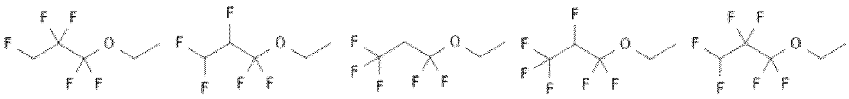
II-31 II-32 II-33 II-34 II-35

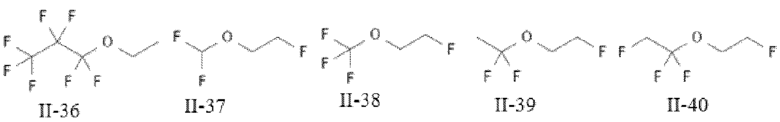
II-36 II-37 II-38 II-39 II-40

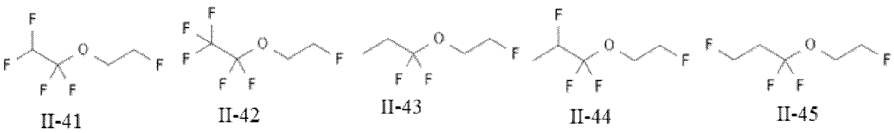
II-41 II-42 II-43 II-44 II-45

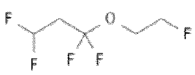
II-46
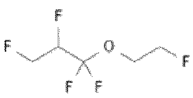
II-47
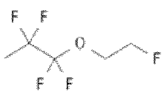
II-48
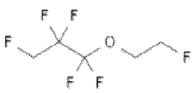
II-49

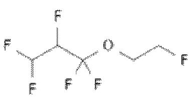
II-50
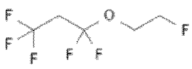
II-51
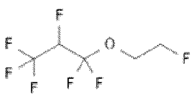
II-52
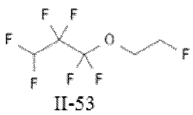
II-53

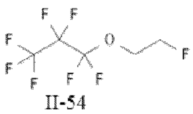
II-54
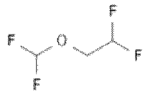
II-55
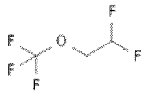
II-56
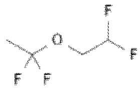
II-57
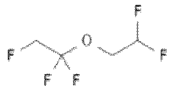
II-58

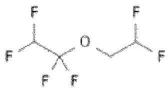
II-59
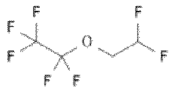
II-60
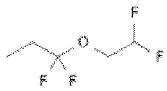
II-61
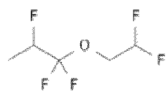
II-62
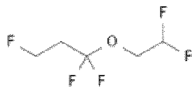
II-63

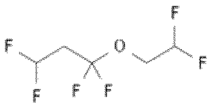
II-64
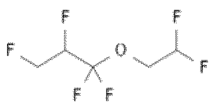
II-65
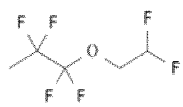
II-66
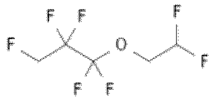
II-67

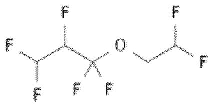
II-68
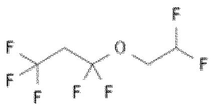
II-69
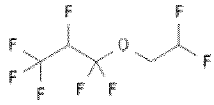
II-70
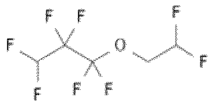
II-71

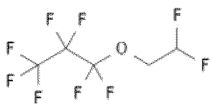
II-72
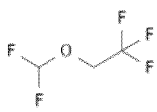
II-73
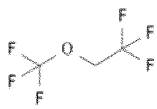
II-74
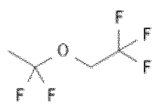
II-75

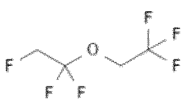
II-76
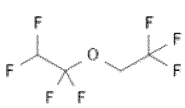
II-77
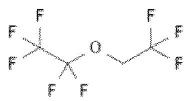
II-78
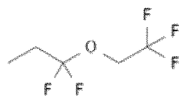
II-79

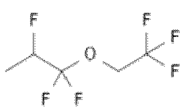
II-80
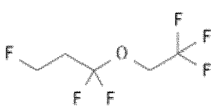
II-81
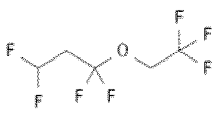
II-82
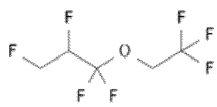
II-83

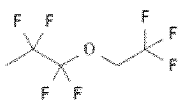
II-84
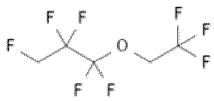
II-85
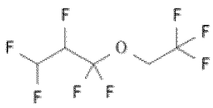
II-86
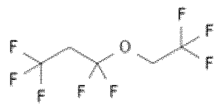
II-87

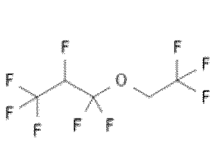
II-88
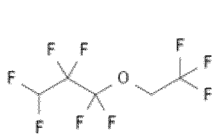
II-89
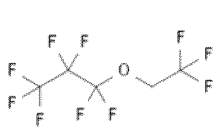
II-90
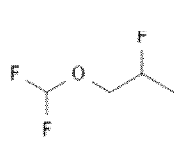
II-91

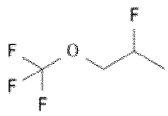
II-92

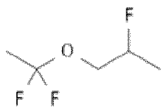
II-93

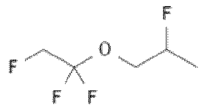
II-94

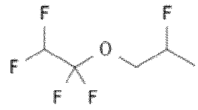
II-95

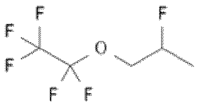
II-96

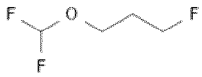
II-97

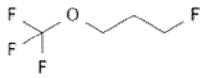
II-98

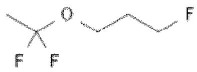
II-99

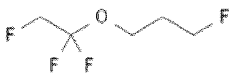
II-100

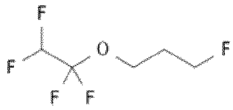
II-101

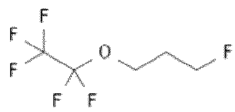
II-102

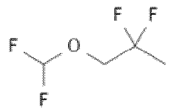
II-103

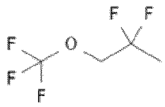
II-104

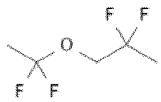
II-105

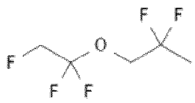
II-106

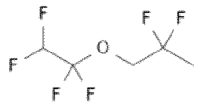
II-107

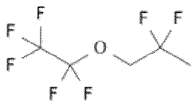
II-108

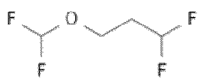
II-109

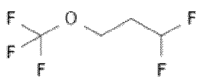
II-110

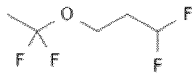
II-111

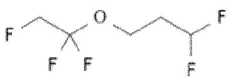
II-112

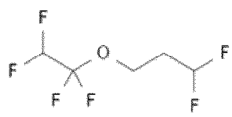
II-113

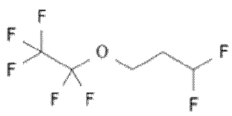
II-114

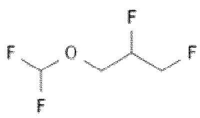
II-115

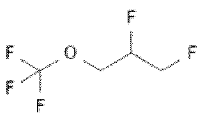
II-116

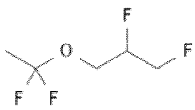
II-117

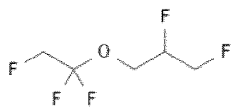
II-118

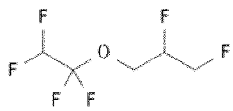
II-119

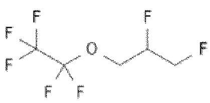
II-120

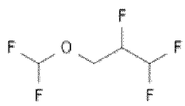
II-121

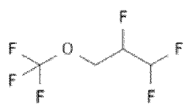
II-122

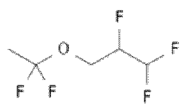
II-123

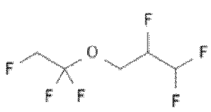
II-124

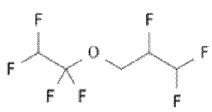
II-125

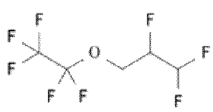
II-126

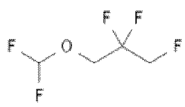
II-127

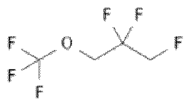
II-128
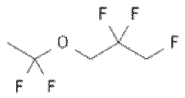
II-129
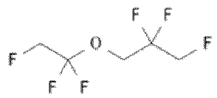
II-130
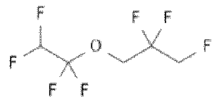
II-131
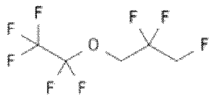
II-132
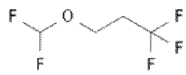
II-133
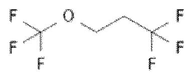
II-134
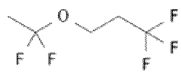
II-135
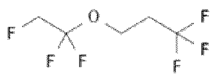
II-136
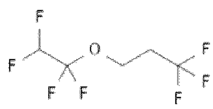
II-137
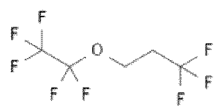
II-138
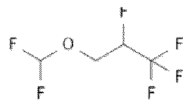
II-139
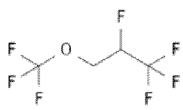
II-140
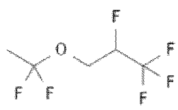
II-141
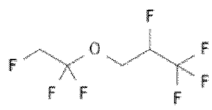
II-142
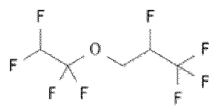
II-143
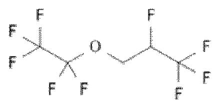
II-144
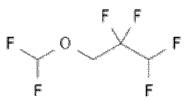
II-145
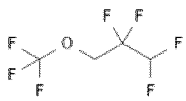
II-146
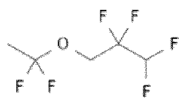
II-147
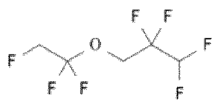
II-148
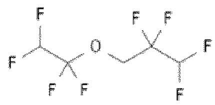
II-149
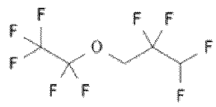
II-150
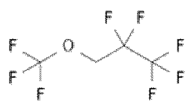
II-151
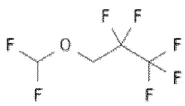
II-152
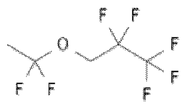
II-153
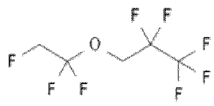
II-154
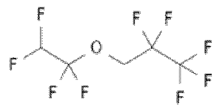
II-155
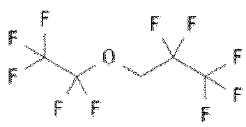
II-156
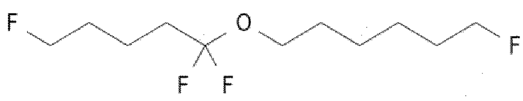
II-157

In some embodiments, the cyclic ether of formula (II) is selected from at least one of compounds II-1, II-77, and II-149. These linear ethers can have excellent oxidation resistance, high miscibility with the cyclic ether of formula (I), and low viscosity.

In some embodiments, a molar ratio of the cyclic ether to the linear ether is greater than 0.1, optionally from 0.6 to 6, more optionally from 0.2 to 5, further optionally from 0.4 to 2.5, and still further optionally from 0.8 to 1.25. In some embodiments, the molar ratio is 1. Within the molar ratio of the cyclic ether to the linear ether falling within the above range, the electrolyte has good oxidation resistance, and the solvent can effectively dissolve the electrolytic salt, has good ion transport performance, and good cycling stability.

In some embodiments, the electrolyte of this application further includes an electrolytic salt, where the electrolytic

salt is an electrolytic salt containing fluorine. In some embodiments, optionally, the electrolytic salt is selected from one or more of the following: lithium bis(fluorosulfonyl)imide (LiFSI), lithium hexafluorophosphate ($LiPF_6$), lithium tetrafluoroborate ($LiBF_4$), lithium hexafluoroarsenate ($LiAsF_6$), lithium bis(trifluoromethanesulfonyl)imide (LiTFSI), lithium trifluoromethanesulfonate (LiOTF), lithium difluorophosphate (LiDFP), lithium bis(oxalato)borate (LiBOB), lithium difluoro(oxalato)borate (LiDFOB), lithium difluoro(bisoxalato)phosphate and lithium tetrafluoro(oxalato)phosphate, sodium hexafluorophosphate ($NaPF_6$), sodium tetrafluoroborate ($NaBF_4$), $NaN(SO_2F)_2$ (NaFSI for short), $NaClO_4$, $NaAsF_6$, $NaB(C_2O_4)_2$ (NaBOB for short), $NaBF_2(C_2O_4)$ (NaDFOB for short), $NaN(SO_2R_F)_2$ and $NaN(SO_2F)(SO_2R_F)$. $R_F$ represents $C_bF_{2b+1}$, b is an integer in the range of 1 to 10, and optionally an integer in the range of 1 to 3. More optionally, $R_F$ is-$CF_3$, $-C_2F_5$, or $-CF_2CF_2CF_3$. More optionally, the electrolytic salt is at least one of lithium bis(fluorosulfonyl)imide, lithium hexafluorophosphate, and lithium difluoro(oxalato)borate; and further optionally, the electrolytic salt is lithium bis(fluorosulfonyl)imide. The above lithium salts can decompose on a surface of a negative electrode to form an SEI component rich in inorganic fluorine, which is conducive to long cycling of the lithium metal battery, and have a good dissociation capability, which helps to achieve a high ionic conductivity of the electrolyte and a low viscosity of the electrolyte, thereby improving the capacity release capability under low-temperature conditions.

In some embodiments, in the electrolyte, a concentration of the electrolytic salt is from 0.3 M to 6 M, optionally from 0.5 M to 5 M, more optionally from 1 M to 3 M, and further optionally from 1.5 M to 2.5 M. In some embodiments, the concentration of the electrolytic salt is 1 M. The concentration of the lithium salt within the above range is neither too high nor too low, while a too high concentration causes a decrease in ionic conductivity and an increase in viscosity, and a too low concentration affects the stability of the electrolyte to the positive and negative electrode. This achieves both long cycling and good low-temperature performance.

SECONDARY BATTERY AND ELECTRIC APPARATUS

Another aspect of this application provides a secondary battery including the electrolyte in the first aspect of this application.

In some embodiments, the secondary battery of this application further includes a negative electrode plate. The negative electrode plate includes a negative electrode current collector and a negative electrode film layer optionally disposed on at least one surface of the negative electrode current collector. The negative electrode current collector is a metal foil, and optionally, the metal foil is selected from copper foil, nickel foil, or stainless steel foil. In addition, the negative electrode film layer is a lithium-containing metal layer or a non-lithium-containing coating.

In some embodiments, the secondary battery of this application is a lithium metal secondary battery with no negative electrode. In this case, the negative electrode of the secondary battery has no negative electrode film layer and has only the negative electrode current collector.

In some embodiments, the lithium-containing metal is a metal element of lithium or a lithium-containing alloy, and optionally, the lithium-containing alloy is an alloy formed by lithium and other metal elements or non-metal elements, where the metal element includes tin (Sn), zinc (Zn), aluminum (Al), magnesium (Mg), silver (Ag), gold (Au), gallium (Ga), indium (In), platinum (Pt), and a combination thereof, and the non-metal element includes boron (B), carbon (C), silicon (Si), and a combination thereof, and

In some embodiments, the non-lithium-containing coating is a coating containing no lithium metal nor oxide thereof. Optionally, the non-lithium-containing coating is selected from tin, zinc, aluminum, magnesium, silver, gold, gallium, indium, platinum, zinc oxide, aluminum oxide, or titanium oxide coating. More optionally, the non-lithium-containing coating is selected from zinc and zinc oxide coating, and further optionally zinc coating. The coating does not serve as an active negative electrode alloy material (that is, negative electrode active material layer), but induces deposition of lithium metal, which is more conducive to improving cycle life.

The coating can be disposed on the current collector (for example, copper foil) in a conventional method in the art, such as vapor deposition or magnetron sputtering.

In some embodiments, a thickness of the non-lithium-containing coating is at most 200 nm, optionally from 50 nm to 200 nm, and more optionally from 50 nm to 100 nm. In some embodiments, the thickness of the coating is 50 nm. The coating containing no lithium metal can induce dense deposition of lithium metal and have the function of improving the cycling efficiency.

The secondary battery takes the form of battery cell, battery module, and battery pack.

Another aspect of this application provides an electric apparatus including the secondary battery of this application.

In addition, the following describes the battery cell, the battery module, the battery pack, and the electric apparatus of this application with appropriate reference to the accompanying drawings.

An embodiment of this application provides a secondary battery.

Normally, the secondary battery includes a positive electrode plate, a negative electrode plate, an electrolyte, and a separator. In a charge and discharge process of the battery, active ions are intercalated and deintercalated between

the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

[Positive electrode plate]

The positive electrode plate includes a positive electrode current collector and a positive electrode film layer disposed on at least one surface of the positive electrode current collector, where the positive electrode film layer includes the positive electrode active material according to the first aspect of this application

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for batteries in the art. For example, the positive electrode active material can include at least one of the following materials: olivine-structured lithium-containing phosphate, lithium transition metal oxide and respective modified compound thereof, sodium transition metal oxide, polyanionic compound, and Prussian blue compound. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (or $NCM_{333}$ for short), $LiNi_{0.5}Co_{0.2}Mn_{0.3}O_2$ (or $NCM_{523}$ for short), $LiNi_{0.5}Co_{0.25}Mn_{0.25}O_2$ (or $NCM_{211}$ for short), $LiNi_{0.6}Co_{0.2}Mn_{0.2}O_2$ (or $NCM_{622}$ for short), and $LiNi_{0.8}Co_{0.1}Mn_{0.1}O_2$ (or $NCM_{811}$ for short)), $LiNi_{0.96}Co_{0.02}Mn_{0.02}O_2$ (or $Ni_{96}$ for short), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), composite materials of lithium manganese phosphate and carbon, lithium manganese iron phosphate, and composite materials of lithium manganese iron phosphate and carbon.

In some embodiments, for the sodium transition metal oxide, the transition metal can be at least one of Mn, Fe, Ni, Co, Cr, Cu, Ti, Zn, V, Zr, and Ce. The sodium transition metal oxide can be, for example, $Na_xM_yO_2$, where M is one or more of Ti, V, Mn, Co, Ni, Fe, Cr, and Cu, $0 < x \leq 1$, and $0.5 < y \leq 1.5$. In some embodiments, the positive electrode active material may be $Na_{0.88}Cu_{0.24}Fe_{0.29}Mn_{0.47}O_2$.

In some embodiments, the polyanionic compound can be a compound having a sodium ion, a transition metal ion, and a tetrahedral $(YO_4)^{n-}$ anion unit. The transition metal can be at least one of Mn, Fe, Ni, Co, Cr, Cu, Ti, Zn, V, Zr, and Ce; Y can be at least one of P, S, and Si; and n represents the valence state of $(YO_4)^{n-}$.

In some embodiments, the polyanionic compound can alternatively be a compound having a sodium ion, a transition metal ion, a tetrahedral $(YO_4)^{n-}$ anion unit, and a halogen anion. The transition metal can be at least one of Mn, Fe, Ni, Co, Cr, Cu, Ti, Zn, V, Zr, and Ce; Y can be at least one of P, S, and Si; n represents the valence state of $(YO_4)^{n-}$; and halogen can be at least one of F, Cl, and Br.

In some embodiments, the polyanionic compound can alternatively be a compound having a sodium ion, a tetrahedral $(YO_4)^{n-}$ anion unit, a polyhedral $(ZO_y)^{m+}$ unit, and optionally a halogen anion. Y can be at least one of P, S, and Si, n represents the valence state of $(YO_4)^{n-}$; Z represents a transition metal, which can be at least one of Mn, Fe, Ni, Co, Cr, Cu, Ti, Zn, V, Zr, and Ce, m represents the valence state of $(ZO_y)^{m+}$; and halogen can be at least one of F, Cl, and Br.

In some embodiments, the polyanionic compound is, for example, at least one of $NaFePO_4$, $Na_3V_2(PO_4)_3$, $NaM'PO_4F$ (M' is one or more of V, Fe, Mn, and Ni), and $Na_3(VO_y)_2(PO_4)_2F_{3-2y}$ ($0 \leq y \leq 1$).

In some embodiments, the Prussian blue compound can be a compound having a sodium ion, a transition metal ion, and a cyanide ion ($CN^-$). The transition metal can be at least one of Mn, Fe, Ni, Co, Cr, Cu, Ti, Zn, V, Zr, and Ce. The Prussian blue compound is, for example, $Na_aMe_bMe'_c(CN)_6$, where Me and Me' are each independently at least one of Ni, Cu, Fe, Mn, Co, and Zn, $0<a\leq 2$, $0<b<1$, and $0<c<1$.

In some embodiments, the positive electrode film layer further optionally includes a binder. For example, the

binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and diethyl sulfone.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature performance or low-temperature performance of the battery.

[Separator]

In some embodiments, the secondary battery further includes a separator. The separator is not limited to any particular type in this application, and may be any well-known porous separator with good chemical stability and mechanical stability.

In some embodiments, the material of the separator can include at least one of fiberglass, non-woven fabric, polyethylene, polypropylene, polyvinylidene fluoride, and polyimide. The separator may be a single-layer film or a multi-layer composite film, and is not particularly limited. When the separator is a multi-layer composite film, all layers may be made of same or different materials, which is not particularly limited.

[Outer package]

In some embodiments, the secondary battery may include an outer package for packaging the positive electrode plate, the negative electrode plate, and an electrolyte. For example, the positive electrode plate, the negative electrode plate, and the separator may be laminated or wound to form a battery cell of a laminated structure or a battery cell of a wound structure, and the battery cell is packaged in an outer package. The electrolyte may be the electrolyte according to the first aspect of this application, and the electrolyte infiltrates into the battery cell. There may be one or more battery cells in the secondary battery, and the quantity can be adjusted based on needs.

In an embodiment, this application provides an electrode assembly. In some embodiments, the positive electrode plate, the negative electrode plate, and the separator may be made into an electrode assembly through winding or lamination. The outer package may be used for packaging the electrode assembly and the electrolyte.

In some embodiments, the outer package of the secondary battery may alternatively be a soft pack, for example, a soft pouch. A material of the soft pack may be plastic, for example, may include one or more of polypropylene (PP), polybutylene terephthalate (PBT), polybutylene succinate (PBS), and the like. In some embodiments, the outer package of the secondary battery may be a hard shell, for example, a hard plastic shell, an aluminum shell, or a steel shell. This application does not impose any special limitations on a shape of the secondary battery, and the secondary battery may be cylindrical, rectangular, or of any other shapes. For example, FIG. 1 shows a rectangular battery cell 5 as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The battery cell 5 may include one or more electrode assemblies 52, and persons skilled in the art may make choices according to actual requirements.

In some embodiments, the battery cell may be assembled into a battery module, and the battery module may include one or more battery cells. The specific quantity may be chosen by persons skilled in the art based on the use and

capacity of the battery module.

FIG. 3 shows a battery module 4 as an example. Referring to FIG. 3, in the battery module 4, a plurality of battery cells 5 may be sequentially arranged in a length direction of the battery module 4. Certainly, the batteries may alternatively be arranged in any other manners. Further, the plurality of battery cells 5 may be fastened by using fasteners.

Optionally, the battery module 4 may further include a housing with an accommodating space, and the plurality of battery cells 5 are accommodated in the accommodating space.

In some embodiments, the battery cell or battery module may alternatively be assembled into a battery pack. The battery pack may include one or more battery cells or battery modules. The specific quantity may be chosen by persons skilled in the art based on the use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus, where the electric apparatus includes the secondary battery provided in this application. The secondary battery may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For the electric apparatus, its usage requirements may be used to select the battery cell, the battery module, or the battery pack.

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually needs to be light and thin, and the battery cell may be used as a power source.

## Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

1. Preparation of electrolyte

Compound I-1 and compound II-77 of an equal mole number were taken, and mixed to uniformity to obtain a mixed solvent. 1.87 g of lithium bis(fluorosulfonyl)imide salt (LiFSI) was taken and added into 5 ml of the mixed solvent. They were stirred thoroughly to form a colorless and transparent electrolyte with a concentration of 2 M, which was used for subsequent performance testing and cell cycling.

2. Preparation of lithium metal secondary battery with no negative electrode

(1) Preparation of positive electrode: A positive electrode active material of lithium nickel cobalt manganese oxide $LiNi_{0.8}Co_{0.1}Mn_{0.1}O_2$ (NCMsn), a conductive agent acetylene black, and a binder PVDF were mixed at a mass ratio of 98:1:1, a solvent N-methylpyrrolidone (NMP) was added, and they were stirred until the system was uniform to obtain a positive electrode slurry (with a solid content of 70%). The positive electrode slurry was evenly applied on both sides of a positive electrode current collector aluminum foil at a loading of about 25 mg/cm$^2$, air dried at room temperature, and then transferred to an oven for further drying. The foil was cut into 40 mm*50 mm rectangles to make positive electrode plates, with a positive electrode surface capacity of 3.5 mAh/cm$^2$.

(2) Separator: A polyethylene porous film was used and cut into 45 mm*55 mm rectangles for later use.

(3) Preparation of negative electrode: A 12 μm thick copper foil was used and cut into 41 mm*51 mm rectangles to

serve as negative electrode plates for later use.

(4) Battery assembly: One cut positive electrode plate was matched with two cut negative electrode plates, with the above separator disposed therebetween to separate the positive electrode and negative electrode. They were wrapped in an aluminum-plastic film bag to form a stacked dry cell. 0.3 g of the electrolyte was injected, vacuum heat sealing was performed on the aluminum-plastic film bag to obtain a stacked battery (with a rated capacity of 140 mAh). The stacked battery was left standing at room temperature for at least 6 hours before the cycling test was started.

3. Room temperature long cycling test for liquid lithium metal secondary battery with no negative electrode

The stacked battery prepared above was taken. At an ambient temperature of 25°C, the battery was charged at a constant rate of 0.2C (that is, 28 mA) to a cut-off voltage of 4.3V, charged at the constant voltage of 4.3V until the current decayed to 0.1C (that is, 14 mA), then discharged at a rate of 1C (140 mA) to 2.8 V This was one charge-discharge cycle. Such charge-discharge cycle was repeated, and the discharge capacity of each cycle was tested. When the discharge capacity of a certain cycle decayed to 80% of the first cycle discharge capacity, the life of the battery was considered to end, and the number of cycles at this point was the cycle life. The test results are shown in Table 1 below.

4. Discharge capacity test of liquid lithium metal secondary battery with no negative electrode at high and low temperatures

The battery prepared above was taken and placed in a Vötsch VT4044 high and low temperature test chamber. First, the temperature of the high and low temperature chamber was set to 25°C, and 2 charge-discharge cycles were performed in the manner described in (1) to activate the cell. Then, the temperature of the high and low temperature chamber was set to -40°C and 25°C respectively, and 3 charge-discharge cycles were performed in the manner described in (1). The discharge capacity of each cycle was recorded, and the average value was calculated.

The low-temperature capacity retention rate was calculated using the following formula:

$$\text{Capacity rentation rate} = \frac{\text{average discharge capacity below} - 40°\text{C}}{\text{average discharge capacity below } 25°\text{C}} \times 100\%$$

The test results are shown in Table 1 below.

5. Low temperature long cycling test for liquid lithium metal secondary battery

The battery prepared above was taken and placed in a Vötsch VT4044 high and low temperature test chamber. The temperature of the high and low temperature chamber was set to -40°C, charge-discharge cycling was performed in the manner described in (1), and the discharge capacity of each cycle was recorded. When the discharge capacity of a certain cycle decayed to 80% of the first cycle discharge capacity, the life of the battery was considered to end, and the number of cycles at this point was the cycle life of the battery. The test results are shown in Table 1 below.

**Examples 2 to 13**

The preparation and testing methods of Examples 2 to 13 were similar to those of Example 1 except that the cyclic ether to the linear ether solvent were different. Details and test results are shown in Table 1.

**Comparative Examples 1 to 6**

In Comparative Example 1, 1.87 g of lithium bis(fluorosulfonyl)imide salt wan taken and added into 5 ml of solvent I-1. They were stirred thoroughly to form a colorless and transparent electrolyte with a concentration of 2 M, which was used for subsequent performance testing and cell cycling.

The preparation and testing methods of Comparative Examples 2 to 6 were similar to those of Comparative Example 1, except that the solvents were different. Details are shown in Table 1.

**Table 1**

| No. | Cyclic ether of formula (I) | Linear ether of formula (II) | Molar ratio | Electrolytic salt | Concentration of electrolytic salt (M) | Cycle life at room temperature (cycles) | Capacity retention rate at -40°C | Cycle life at -40°C (cycles) |
|---|---|---|---|---|---|---|---|---|
| Example 1 | I-1 | II-77 | 1 | LiFSI | 2 | 121 | 71% | 92 |
| Example 2 | I-1 | II-149 | 1 | LiFSI | 2 | 120 | 68% | 89 |
| Example 3 | I-57 | II-149 | 1 | LiFSI | 2 | 117 | 67% | 86 |
| Example 4 | I-78 | II-149 | 1 | LiFSI | 2 | 116 | 66% | 86 |
| Example 5 | I-144 | II-149 | 1 | LiFSI | 2 | 117 | 66% | 84 |
| Example 6 | I-168 | II-149 | 1 | LiFSI | 2 | 91 | 62% | 69 |
| Example 7 | I-169 | II-149 | 1 | LiFSI | 2 | 85 | 61% | 63 |
| Example 8 | I-170 | II-149 | 1 | LiFSI | 2 | 73 | 57% | 60 |
| Example 9 | I-5 | II-77 | 1 | LiFSI | 2 | 82 | 67% | 64 |
| Example 10 | I-1 | II-1 | 1 | LiFSI | 2 | 88 | 71% | 66 |
| Example 11 | I-1 | II-2 | 1 | LiFSI | 2 | 86 | 72% | 67 |
| Example 12 | I-1 | II-3 | 1 | LiFSI | 2 | 88 | 70% | 67 |
| Example 13 | I-1 | II-157 | 1 | LiFSI | 2 | 75 | 62% | 58 |
| Comparative Example 1 | I-1 | - | - | LiFSI | 2 | 60 | 61% | 41 |
| Comparative Example 2 | I-57 | - | - | LiFSI | 2 | 53 | 59% | 35 |
| Comparative Example 3 | I-78 | - | - | LiFSI | 2 | 53 | 57% | 33 |
| Comparative Example 4 | I-144 | - | - | LiFSI | 2 | 51 | 58% | 34 |
| Comparative Example 5 | Tetrahydrofuran | - | - | LiFSI | 2 | 24 | 68% | 18 |
| Comparative Example 6 | - | Dimethoxyethane | - | LiFSI | 2 | 22 | 0% | - |

It can be seen from Table 1 that the electrolyte of this application has good cycling stability and long cycle life in a wide temperature range, and has a high low-temperature capacity retention rate. Using only cyclic ether solvents is impossible to achieve good long cycle life and low-temperature performance in lithium metal secondary batteries with no negative electrode. This indicates the necessity of adding the linear ether solvent of the present invention for cycling of such batteries. Using the two solvents in combination offers more benefits: significantly improving the cycle life of lithium metal batteries with no negative electrode and further improving the capacity retention rate and cycle life at low temperature. Using other solvents in the prior art cannot achieve the desired cycling performance either.

**Examples 14 to 20**

The preparation and testing methods of Examples 8 to 15 were similar to those of Example 1 except that the molar ratios of the cyclic ether to the linear ether solvent were different. Details and test results are shown in Table 2.

**Table 2**

| No. | Cyclic ether of formula (I) | Linear ether of formula (II) | Molar ratio | Electrolytic salt | Concentration of electrolytic salt (M) | Cycle life at room temperature (cycles) | Capacity retention rate at –40°C | Cycle life at –40°C (cycles) |
|---|---|---|---|---|---|---|---|---|
| | | | | | | | | |
| Example 14 | I-1 | II-77 | 0.2 | LiFSI | 2 | 80 | 58% | 67 |
| Example 15 | I-1 | II-77 | 0.4 | LiFSI | 2 | 91 | 66% | 70 |
| Example 16 | I-1 | II-77 | 0.8 | LiFSI | 2 | 113 | 70% | 88 |
| Example 1 | I-1 | II-77 | 1 | LiFSI | 2 | 121 | 71% | 92 |
| Example 17 | I-1 | II-77 | 1.25 | LiFSI | 2 | 116 | 71% | 89 |
| Example 18 | I-1 | II-77 | 2.5 | LiFSI | 2 | 96 | 68% | 74 |

| No. | Cyclic ether of formula (I) | Linear ether of formula (II) | Molar ratio | Electrolytic salt | Concentration of electrolytic salt (M) | Cycle life at room temperature (cycles) | Capacity retention rate at –40°C | Cycle life at –40°C (cycles) |
|---|---|---|---|---|---|---|---|---|
| Example 19 | I-1 | II-77 | 5 | LiFSI | 2 | 82 | 60% | 66 |
| Example 20 | I-1 | II-77 | 6 | LiFSI | 2 | 71 | 57% | 49 |

* Unable to test because the electrolytic salt could not dissolve

It can be seen from Table 2 that with the molar ratio of the cyclic ether to the linear ether falling within the range of 0.2 to 6, the electrolyte can effectively dissolve the lithium salt and has good cycle life and high low-temperature capacity retention rate in a wide temperature range.

**Examples 21 to 28**

The preparation and testing methods of Examples 21 to 28 were similar to those in Example 1 except that the concentrations of the electrolytic salts were different. Details and test results are shown in Table 3.

**Examples 29 and 30**

The preparation and testing methods of Examples 29 and 30 were similar to those in Example 1 except that the electrolytic salts were different. Details and test results are shown in Table 3.

**Table 3**

| No. | Cyclic ether of formula (I) | Linear ether of formula (II) | Molar ratio | Electrolytic salt | Concentration of electrolytic salt (M) | Cycle life at room temperature (cycles) | Capacity retention rate at –40°C | Cycle life at –40°C (cycles) |
|---|---|---|---|---|---|---|---|---|
| Example 21 | I-1 | II-77 | 1 | LiFSI | 0.3 | 75 | 62% | 50 |
| Example 22 | I-1 | II-77 | 1 | LiFSI | 0.5 | 86 | 64% | 62 |
| Example 23 | I-1 | II-77 | 1 | LiFSI | 1 | 98 | 67% | 72 |
| Example 24 | I-1 | II-77 | 1 | LiFSI | 1.5 | 109 | 70% | 85 |
| Example 1 | I-1 | II-77 | 1 | LiFSI | 2 | 121 | 71% | 92 |
| Example 25 | I-1 | II-77 | 1 | LiFSI | 2.5 | 114 | 70% | 86 |
| Example 26 | I-1 | II-77 | 1 | LiFSI | 3 | 102 | 66% | 70 |
| Example 27 | I-1 | II-77 | 1 | LiFSI | 5 | 91 | 60% | 59 |
| Example 28 | I-1 | II-77 | 1 | LiFSI | 6 | 79 | 58% | 48 |
| Example 29 | I-1 | II-77 | 1 | $LiPF_6$ | 2 | 76 | 59% | 50 |
| Example 30 | I-1 | II-77 | 1 | LiDFOB | 2 | 71 | 55% | 46 |

It can be seen from Table 3 that the concentration of the lithium salt falling within the range of 0.3 M to 6 M, and preferably 0.5 M to 5 M can achieve a good low-temperature capacity release capability and long cycle life in a wide temperature range. Additionally, the electrolytic salt being lithium bis(fluorosulfonyl)imide, lithium hexafluorophosphate, or lithium difluoro(oxalato)borate, especially lithium bis(fluorosulfonyl)imide is more conducive to the cycle life and utilization of the low-temperature performance.

**Examples 31 to 34**

In Example 31, the negative electrode copper foil current collector was first vapor-deposited with a 50 nm thick Zn layer, then was used to make a lithium metal battery with no negative electrode. Other parts were similar to those in Example 1. See Table 4 for details.

The preparation and testing methods of Examples 32 and 33 were similar to those in Example 32. Details are shown in Table 4.

In Example 34, the negative electrode copper foil current collector was first magnetron sputtered with a 50 nm thick ZnO layer, then was used to make a lithium metal battery with no negative electrode. Other parts were similar to those in Example 26. See Table 4.

**Table 4**

| No. | Cyclic ether of formula (I) | Linear ether of formula (II) | Molar ratio | Coating | Coating thickness (nm) | Cycle life at room temperature (cycles) | Capacity retention rate at −40°C | Cycle life at −40°C (cycles) |
|---|---|---|---|---|---|---|---|---|
| Example 31 | I-1 | II-77 | 1 | Zn | 50 | 129 | 70% | 96 |
| Example 32 | I-1 | II-77 | 1 | Zn | 100 | 124 | 70% | 93 |
| Example 33 | I-1 | II-77 | 1 | Zn | 200 | 119 | 68% | 90 |
| Example 34 | I-1 | II-77 | 1 | ZnO | 50 | 122 | 66% | 92 |

It can be seen from Table 4 that when the negative electrode current collector has a coating, the cycle life and low-temperature performance are better. Using a metal Zn coating is more conducive to improving the cycle life. The thickness of the coating is 200 nm at most, and optionally between 50-200 nm. This range offers optimal performance.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte, comprising a solvent, wherein the solvent comprises at least one cyclic ether of formula (I) and at least one linear ether of formula (II);

wherein the cyclic ether of formula (I) has the following structure:

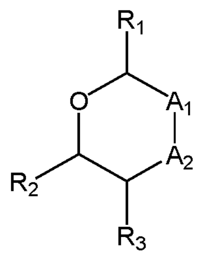

I,

wherein
$A_1$ is an oxygen atom, a single bond, or $CHR_4$,
$A_2$ is an oxygen atom or $CHR_5$,
$A_2$ is different from $A_1$, and when $A_1$ is $CHR_4$, $A_2$ is not $CHR_5$,
$R_1$, $R_2$, and $R_5$ are each independently a hydrogen atom, C1-6 alky, or C1-6 fluoroalkyl,
$R_3$ and $R_4$ are each independently a hydrogen atom, a fluorine atom, C1-6 alkyl, or C1-6 fluoroalkyl, and
$R_1$ to $R_5$ comprise 1 to 3 fluorine atoms; and
the linear ether of formula (II) has the following structure:

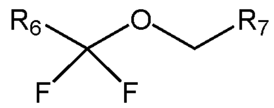

II,

wherein

$R_6$ is a hydrogen atom, a fluorine atom, C1-6 alkyl, or C1-6 fluoroalkyl, and

$R_7$ is a hydrogen atom, C1-6 alkyl, or C1-6 fluoroalkyl.

**2.** The electrolyte according to claim 1, wherein $R_1$, $R_2$, and $R_5$ are each independently a hydrogen atom, C1-4 alkyl, or C1-4 fluoroalkyl, and optionally a hydrogen atom, methyl, or fluoromethyl; and/or
$R_3$ and $R_4$ are each independently a hydrogen atom, a fluorine atom, C1-4 alkyl, or C1-4 fluoroalkyl, and optionally a hydrogen atom, a fluorine atom, methyl, or fluoromethyl.

**3.** The electrolyte according to claim 1 or 2, wherein one and only one of $R_1$ to $R_5$ is a fluorine-containing substituent selected from a fluorine atom or C1-6 fluoroalkyl.

**4.** The electrolyte according to any one of claims 1 to 3, wherein the cyclic ether of formula (I) is selected from at least one of the following compounds:

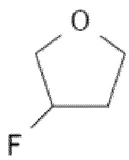

I-1 ,

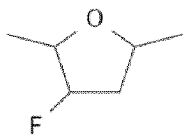

I-5 ,

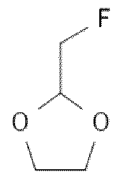

I-57 ,

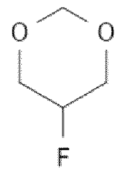

I-78 ,

and

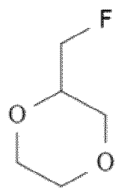

I-144 .

**5.** The electrolyte according to any one of claims 1 to 4, wherein $R_6$ is a hydrogen atom, a fluorine atom, C1-5 alkyl, or C1-5 fluoroalkyl, and optionally a hydrogen atom, a fluorine atom, C1-2 alkyl, or C1-2 fluoroalkyl; and/or
$R_7$ is a hydrogen atom, C1-5 alkyl, or C1-5 fluoroalkyl, and optionally a hydrogen atom, C1-2 alkyl, or C1-2 fluoroalkyl.

**6.** The electrolyte according to any one of claims 1 to 5, wherein a carbon atom count of at least one of $R_6$ and $R_7$ is less than 2.

**7.** The electrolyte according to any one of claims 1 to 6, wherein the linear ether of formula (II) is selected from at least one of the following compounds:

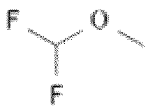
II-1
,
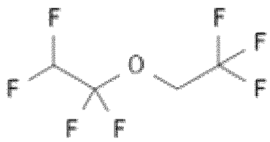
II-77
, and
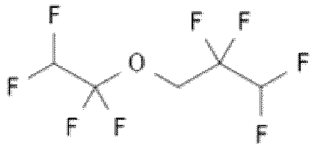
II-149
.

**8.** The electrolyte according to any one of claims 1 to 7, wherein a molar ratio of the cyclic ether to the linear ether is greater than 0.1, optionally from 0.2 to 6, more optionally from 0.2 to 5, further optionally from 0.4 to 2.5, and still further optionally from 0.8 to 1.25.

**9.** The electrolyte according to any one of claims 1 to 8, further comprising an electrolytic salt, wherein the electrolytic salt is an electrolytic salt containing fluorine; optionally, the electrolytic salt is selected from one or more of the following: lithium bis(fluorosulfonyl)imide, lithium hexafluorophosphate, lithium tetrafluoroborate, lithium hexafluoroarsenate, lithium bis(trifluoromethanesulfonyl)imide, lithium trifluoromethanesulfonate, lithium difluorophosphate, lithium bis(oxalato)borate, lithium difluoro(oxalato)borate, lithium difluoro(bisoxalato)phosphate, and lithium tetrafluoro(oxalato)phosphate; more optionally, the electrolytic salt is selected from at least one of lithium bis(fluorosulfonyl)imide, lithium hexafluorophosphate, and lithium difluoro(oxalato)borate; and further optionally, the electrolytic salt is lithium bis(fluorosulfonyl)imide.

**10.** The electrolyte according to claim 9, wherein a concentration of the electrolytic salt is from 0.3 M to 6 M, optionally from 0.5 M to 5 M, more optionally from 1 M to 3 M, and further optionally from 1.5 M to 2.5 M.

**11.** A secondary battery, comprising the electrolyte according to any one of claims 1 to 10.

**12.** The secondary battery according to claim 11, further comprising a negative electrode plate, wherein the negative electrode plate comprises a negative electrode current collector and a negative electrode film layer optionally disposed on at least one surface of the negative electrode current collector; wherein

the negative electrode film layer is a lithium-containing metal layer or a non-lithium-containing coating; wherein the lithium-containing metal is a metal element of lithium or a lithium-containing alloy, and optionally, the lithium-containing alloy is an alloy formed by lithium and other metal elements or non-metal elements, wherein the metal element comprises tin (Sn), zinc (Zn), aluminum (Al), magnesium (Mg), silver (Ag), gold (Au), gallium (Ga), indium (In), platinum (Pt), and a combination thereof, and the non-metal element comprises boron (B), carbon (C), silicon (Si), and a combination thereof, and
the non-lithium-containing coating is a coating containing no lithium metal nor oxide thereof, optionally, the non-lithium-containing coating is selected from tin, zinc, aluminum, magnesium, silver, gold, gallium, indium, platinum, zinc oxide, aluminum oxide, or titanium oxide coating, optionally zinc or zinc oxide coating, and more optionally zinc coating.

**13.** The secondary battery according to claim 12, wherein a thickness of the non-lithium-containing coating is at most 200 nm, optionally from 50 nm to 200 nm, and more optionally from 50 nm to 100 nm.

**14.** An electric apparatus, comprising the secondary battery according to any one of claims 11 to 13.

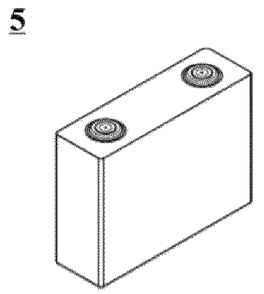


FIG. 1

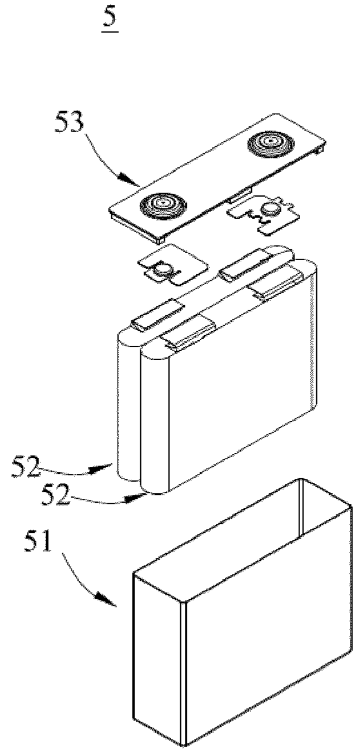


FIG. 2

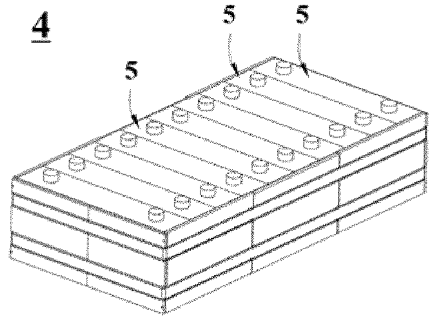


FIG. 3

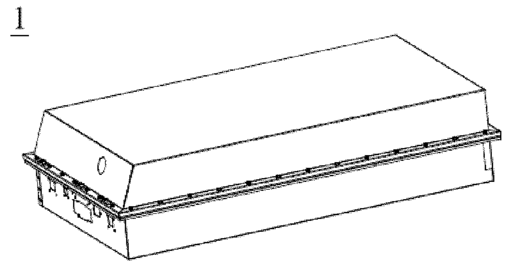


FIG. 4

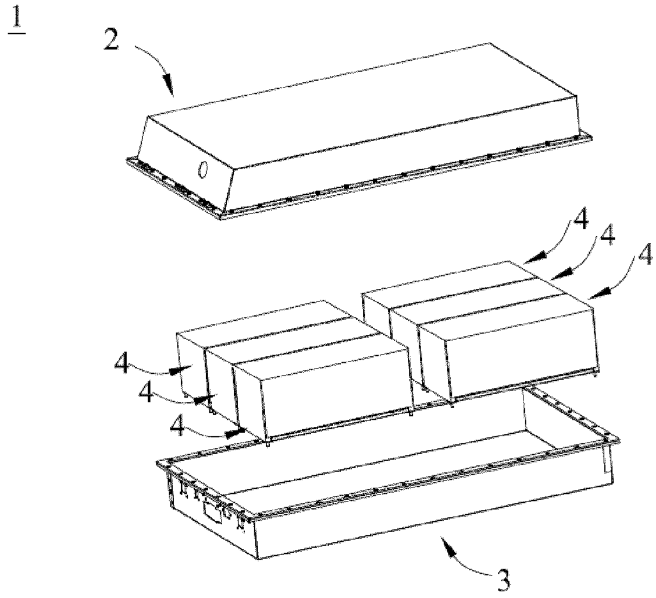


FIG. 5

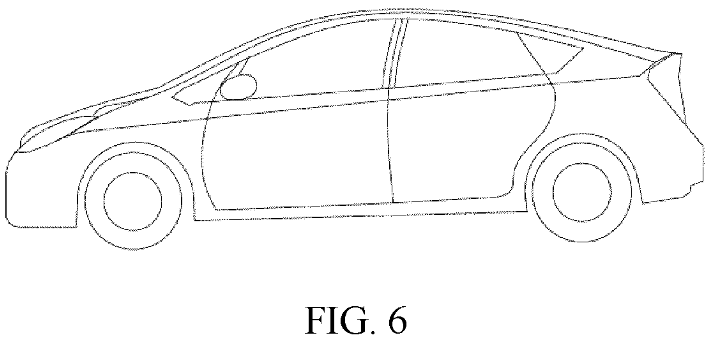

FIG. 6

**INTERNATIONAL SEARCH REPORT**

International application No.
**PCT/CN2023/070363**

**A. CLASSIFICATION OF SUBJECT MATTER**

H01M10/0569(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电解液, 溶剂, 环状醚, 链状醚, 氟代醚, electrolyte, solvent, cyclic ether, chain ether, fluorinated ether

**C. DOCUMENTS CONSIDERED TO BE RELEVANT**

| Category* | Citation of document, with indication, where appropriate, of the relevant passages | Relevant to claim No. |
|---|---|---|
| X | US 2015132663 A1 (NEC CORP.) 14 May 2015 (2015-05-14)<br>description, paragraphs 2, 11-104, and 122 | 1-14 |
| X | JP H0837024 A (ASAHI CHEMICAL INDUSTRY CO., LTD.) 06 February 1996 (1996-02-06)<br>description, paragraphs 3-34 | 1-14 |
| X | CN 102479977 A (ZHANGJIAGANG GUOTAI HUARONG NEW CHEMICAL MATERIALS CO., LTD.) 30 May 2012 (2012-05-30)<br>description, paragraphs 4 and 7-20 | 1-14 |
| A | US 2013164603 A1 (NEC CORP.) 27 June 2013 (2013-06-27)<br>entire document | 1-14 |

☐ Further documents are listed in the continuation of Box C. ☑ See patent family annex.

* Special categories of cited documents:

"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 September 2023** | **21 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/070363**

| Patent document cited in search report | | | Publication date (day/month/year) | Patent family member(s) | | | Publication date (day/month/year) |
|---|---|---|---|---|---|---|---|
| US | 2015132663 | A1 | 14 May 2015 | WO | 2013129428 | A1 | 06 September 2013 |
| | | | | US | 9461335 | B2 | 04 October 2016 |
| | | | | JPWO | 2013129428 | A1 | 30 July 2015 |
| | | | | JP | 6079770 | B2 | 15 February 2017 |
| JP | H0837024 | A | 06 February 1996 | None | | | |
| CN | 102479977 | A | 30 May 2012 | None | | | |
| US | 2013164603 | A1 | 27 June 2013 | WO | 2012029625 | A1 | 08 March 2012 |
| | | | | JPWO | 2012029625 | A1 | 28 October 2013 |
| | | | | JP | 5811093 | B2 | 11 November 2015 |
| | | | | US | 9425480 | B2 | 23 August 2016 |

Form PCT/ISA/210 (patent family annex) (July 2022)